Europäisches Patentamt

European Patent Office

Office européen des brevets

(11) Veröffentlichungsnummer: **0 377 128**
**A1**

## (12) EUROPÄISCHE PATENTANMELDUNG

(21) Anmeldenummer: 89122509.6

(51) Int. Cl.⁵: **B60R 25/04**

(22) Anmeldetag: 06.12.89

(30) Priorität: 31.12.88 DE 3844377

(43) Veröffentlichungstag der Anmeldung:
**11.07.90 Patentblatt 90/28**

(84) Benannte Vertragsstaaten:
**AT BE DE ES FR GB IT NL SE**

(71) Anmelder: **Griesemer, Albert**
**Dorfwiese 3**
**D-5438 Westerburg-Gershasen(DE)**

(72) Erfinder: **Schröder, Günter, Dipl.-Ing.**
**Zeisigstrasse 26**
**D-5414 Vallendar(DE)**

(74) Vertreter: **Grommes, Karl F., Dr.**
**Mehlstrasse 14-16**
**D-5400 Koblenz(DE)**

(54) **Zündanlage für Kraftfahrzeuge.**

(57) Zur Diebstahlsicherung von Kraftfahrzeugen soll eine Zündanlage so ausgebildet werden, daß sie nicht mehr unbefugterweise und insbesondere gewaltsam manipuliert werden kann.

Dazu wird als Betätigungsschalter ein Mehrfachimpulsgeber vorgesehen, welcher auf einen in der Zündspule oder in einem Verbraucher integrierten weiteren Schalter als Impulsempfänger wirkt. Zündspule oder Verbraucher lassen sich also nur noch über einen von außen nicht mehr erreichbaren Impulsempfänger ansteuern; dazu bedarf es bestimmter Kenntnisse oder Mittel zur Bedienung des Mehrfachimpulsgebers. Fehlen diese Kenntnisse oder Mittel, so können untaugliche Betätigungsversuche auch dazu führen, daß sich die Zündspule oder der Verbraucher selbst zerstört.

Die Erfindung stellt eine hochwirksame Diebstahlsicherung für alle möglichen Kraftfahrzeuge dar.

## Zündanlage für Kraftfahrzeuge

### Technisches Gebiet

Die Erfindung betrifft eine mittels eines Schalters betätigbare Zündanlage für Kraftfahrzeuge mit einer Zündspule sowie ggf. verschiedenen Verbrauchern.

### Stand der Technik

Als Schalter für Zündanlagen sind Schlüsselschalter, sog. Zündschlösser bekannt. Sie erfordern zur ordnungsgemäßen Betätigung einen passenden Schlüssel. Allerdings bedeutet dieser Umstand keine allzugroße Sicherheit gegen eine unbefugte Betätigung. Es lassen sich nämlich die bekannten Zündschlösser einfach überbrücken, indem die Kabel davon abgeschnitten oder abgerissen und unter Ausschluß des Zündschlosses wieder miteinander verbunden werden.-Wegen dieses Mangels muß in aller Regel noch eine mechanische Diebstahlsicherung in Form eines Lenkradschlosses vorgesehen werden. Aber auch damit läßt sich noch kein zufriedenstellendes Maß an Sicherheit erreichen, da der bei Lenkradschlössern übliche Sicherungsbolzen letztendlich gewaltsam abgeschert werden kann und damit unwirksam wird.

### Darstellung der Erfindung

Hier setzt nun die Erfindung an. Sie möchte eine Zündanlage angeben, welche ein höheres Maß an Sicherheit gegen eine unbefugte Betätigung besitzt.

Diese Aufgabe wird auf einfache Weise dadurch gelöst, daß als Betätigungsschalter ein Mehrfachimpulsgeber vorgesehen ist, welcher auf einen in der Zündspule oder in einem Verbraucher integrierten weiteren Schalter als Impulsempfänger wirkt.

Der vorgeschlagene weitere Schalter entscheidet darüber, ob das damit verbundene Bauteil in Funktion geht oder nicht. Der Schalter ist in das Bauteil derart eingefügt und ggf. gekapselt, daß ein beliebiger Zugriff von außen nicht möglich ist. Vielmehr läßt sich der Schalter nur durch eine spezielle Ansteuerung betätigen, nämlich mittels des erfindungsgemäßen Betätigungsschalters. Zu dessen Bedienung bedarf es aber - wie im folgenden noch näher erläutert wird -spezieller Informationen.

Wie ersichtlich, treten mit dieser Ausführungsform für einen unbefugten Benutzer Erschwernisse auf, welche er nicht mehr durch einfache und insbesondere gewaltsame Manipulationen ausräumen kann. Vielmehr bleibt mindestens ein wesentlicher Teil der Zündanlage weiterhin außer Funktion and verharrt deshalb das Kraftfahrzeug nach wie vor im Stillstand. Erst durch einen Austausch des erfindungsgemäßen Bauteils gegen ein normales Bauteil könnte das Sicherheitsmoment eliminiert werden. Es ist allerdings kaum vorstellbar, daß jemals geeignete Bauteile von Dieben als Ersatz mitgeführt werden und vor allem genügend Zeit für einen unbemerkten Austausch zur Verfügung steht. Ein solcher Fall dürfte deshalb praktisch ohne Bedeutung bleiben.

Nach einem weiteren Vorschlag ist als Betätigungsschalter ein Mehrfachimpulsgeber vorgesehen, welcher auf einen in der Zündspule oder in einem Verbraucher integrierten Zweiwegeschalter als Impulsempfänger wirkt, wobei der eine Weg die normale Versorgungsleitung für einen Dauerbetrieb und der andere Weg ein elektrisches Leitungselement für eine Selbstzerstörung der Zündspule oder eines Verbrauchers darstellt.

Diese Ausführungsform schließt auch die (entfernte) Möglichkeit aus, den Betätigungsschalter durch Ausprobieren zufällig noch richtig zu bedienen. Wenn nämlich der Impulsgeber nicht gezielt, d. h. auf Anhieb in der richtigen Weise betätigt wird, so kommt es zur Zerstörung eines wesentlichen Bauteils. Um auch hier auszuschließen, daß diese Folge durch äussere Eingriffe noch beeinflußbar ist, sollte der Zweiwegeschalter wie auch das elektrische Leitungselement zur Selbstzerstörung geschützt in dem jeweiligen Bauteil untergebracht sein.

Bei dem Bauteil kann es sich beispielsweise um einen Verbraucher und insbesondere eine Kraftstoffpumpe handeln. Ebensogut kann auch als maßgebliches Bauteil die Zündspule herangezogen werden. In letzterem Falle kommt als elektrisches Leitungselement beispielsweise eine in den Kern eingesetzte Schmelzsicherung in Betracht.-Alle jene Maßnahmen bleiben solange ohne Wirkung und Bedeutung, wie der Betätigungsschalter ordnungsgemäß bedient wird. Dann nämlich steuert er (als Impuls- oder Taktgeber) den Zweiwegeschalter (als Impuls- oder Taktempfänger) dahingehend an, daß eine normale Funktion, also Dauerbetrieb für die Zündanlage freigegeben wird.

Vorteilhaft ist in die Versorgungsleitung für den Dauerbetrieb ein Zeitschalter eingebaut, welcher durch wiederholtes Bedienen des Betätigungsschalters überbrückbar ist.

Zweckmäßigerweise ist der Betätigungsschalter mit einnem Kontrollorgan zur Überprüfung einer rechtzeitig wiederholten Bedienung derart verbunden, daß bei nicht rechtzeitiger X-maliger Wiederholung das elektrische Leitungselement zur Selbstzerstörung an Spannung gerät.

Nach einem weiteren Vorschlag besteht zu dem Zeitschalter eine Überbrückungsleitung mit einem Kontrollschalter, welcher nach wiederholtem und rechtzeitigem Bedienen des Betätigungsschalters geschlossen bleibt.

Als Betätigungsschalter (Mehrfachimpulsgeber) kann insbesondere eine Codekarte in Verbindung mit einem Kartenleser vorgesehen sein.

Nach einem anderen Vorschlag ist als Betätigungsschalter ein programmierbares Codeschloß vorgesehen. Es handelt sich dabei um einen Rechner mit Tastatur.

In Betracht kommt als Betätigungsschalter auch ein Näherungsinitiator, insbesondere ein Daumen- oder Fingerprint.

Bequem und zweckmäßig ist als Betätigungsschalter auch ein Spezialschlüssel und -schloß mit mehreren Impulsstellen.

Schließlich kann auch eine drahtlose Bedienung erfolgen, wenn als Betätigungsschalter eine aus Sender und Empfänger bestehende Funksteuerung vorgesehen ist.

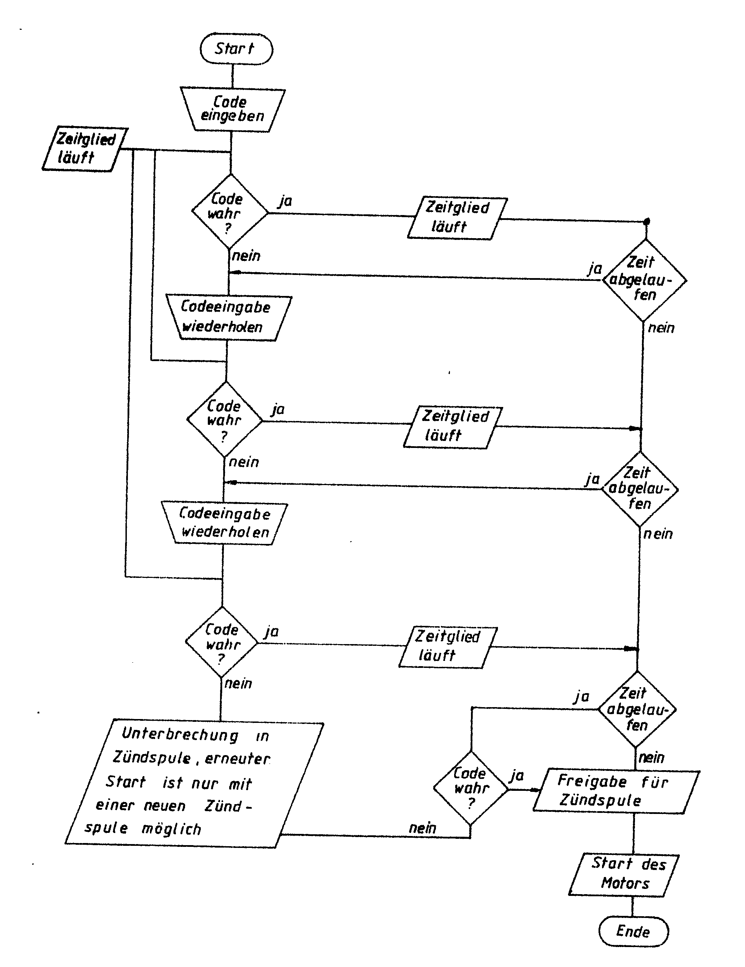

Kurze Beschreibung der Zeichnung

Weitere Einzelheiten und Vorteile werden nachstehend anhand eines Funktionsschaubildes für ein bevorzugtes Ausführungsbeispiel beschrieben.

Das Kraftfahrzeug wird nicht mehr - wie bisher - mit einem Schlüsselschalter gestartet; es gibt auch kein Lenkradschloß mehr (dies ist nicht notwendig aufgrund der neuen elektronischen Diebstahlsicherung). Der Start erfolgt über eine Codekarte oder die Eingabe eines Codes von Hand. Nachdem ein IC (integrierte Schaltung) den Code verglichen hat und eine Rückmel dung darüber erhalten hat, daß das Getriebe des Fahrzeuges so geschaltet ist, daß eine neutrale Position angezeigt wird, erfolgt der Start des Motors automatisch. Der Motor dreht eine bestimmte Zeit X (z. B. eine halbe Minute). Während dieser Zeit ruft das IC eine Quittierung auf. Erfolgt die Quittierung nicht innerhalb dieser Zeit, schaltet das IC die Zündung automatisch wieder ab.

Bei erneuter Code-Eingabe startet das IC den Motor erneut und ruft ebenfalls die Quittierung auf. Erfolgt wieder keine Quittierung, so geht der Motor erneut aus. Das gleiche erfolgt ein drittes Mal. Wenn beim dritten Mal keine Quittierung eingegeben wird, erfolgt durch das IC eine Zerstörung der elektrischen Anlage, hier im Bereich der Zündspule. Danach ist ein erneutes Starten des Fahrzeugs nicht mehr möglich, es sei denn, die Zündspule (oder allgemein das zerstörte elektrische Teil) wird erneuert.

Die Erfindung ist anwendbar auf Kraftfahrzeuge mit Otto-Motoren und herkömmlichen Zündeinrichtungen und Diesel-Fahrzeuge mit Einspritzanlagen, die elektrisch bzw. mechanisch überwacht werden.

Zur Diebstahlsicherung wird in die elektrische Anlage (z. B. Zündspule oder Überwachung) insbesondere ein IC mit einem Quittierungscode eingebaut. Dieses IC ist so programmiert, daß es während der Motorlaufzeit in bestimmten Zeitabständen über den eingegebenen Code quasi abfragt, ob der Fahrzeuglenker das Recht hat, diesen Motor zu betreiben.

Sofern der Kraftfahrzeugführer im Besitz der Codekarte oder des Codes ist, muß er in der Anlaufphase (Startphase) diesen Code in bestimmten Zeitabständen mindestens zweimal von Hand (gleichbedeutend mit er neuter Eingabe der Codekarte) quittieren. Danach übernimmt das IC automatisch das Quittierungsverfahren, so lange das Fahrzeug nach diesem Start läuft.

Bei jedem neuen Start hat die Quittierung in gleichem Umfang erneut zu erfolgen.

Möglicherweise kommt es auch dann zu Selbstzerstörungen, wenn nicht die Absicht des Diebstahls besteht. Da diese Diebstahlsicherung jedoch äußerst wirksam ist, darf erwartet werden, daß Versicherungsgesellschaften auch dann den Ersatz einer Zündspule bzw. des zerstörten elektrischen Teils bezahlen, jedenfalls lieber solche Kosten tragen, als den Ersatz von ganzen Fahrzeugen im Falle des Diebstahls.

**Ansprüche**

1. Mittels eines Schalters betätigbare Zündanlage für Kraftfahrzeuge mit einer Zündspule sowie ggf. verschiedenen Verbrauchern, dadurch gekennzeichnet, daß als Betätigungsschalter ein Mehrfachimpulsgeber vorgesehen ist, welcher auf einen in der Zündspule oder in einem Verbraucher integrierten weiteren Schalter als Impulsempfänger wirkt.

2. Mittels eines Schalters betätigbare Zündanlage für Kraftfahrzeuge mit einer Zündspule sowie ggf. verschiedenen Verbrauchern, dadurch gekennzeichnet, daß als Betätigungsschalter ein Mehrfachimpulsgeber vorgesehen ist, welcher auf einen in der Zündspule oder in einem Verbraucher integrierten Zweiwegeschalter als Impulsempfänger wirkt, wobei der eine Weg die normale Versorgungsleitung für einen Dauerbetrieb und der andere Weg ein elektrisches Leitungselement für eine Selbstzerstörung der Zündspule oder eines Verbrauchers darstellt.

3. Zündanlage nach Anspruch 2, dadurch gekennzeichnet, daß in die Versorgungsleitung für den Dauerbetrieb ein Zeitschalter eingebaut ist, welcher durch wiederholtes Bedienen des Betätigungsschalters überbrückbar ist.

4. Zündanlage nach Anspruch 3, dadurch gekennzeichnet, daß der Betätigungsschalter mit einem Kontrollorgan zur Überprüfung einer rechtzeitig wiederholten Bedienung derart verbunden ist, daß bei nicht rechtzeitiger Wiederholung das elektrische Leitungselement zur Selbstzerstörung an Spannung gerät.

5. Zündanlage nach Anspruch 3 oder 4, dadurch gekennzeichnet, daß zu dem Zeitschalter eine Überbrükkungsleitung mit einem Kontrollschalter besteht, welcher nach wiederholtem richtigen und rechtzeitigen Bedienen des Betätigungsschalters geschlossen bleibt.

6. Zündanlage nach einem der Ansprüche 1 bis 5, dadurch gekennzeichnet, daß als Betätigungsschalter (Mehrfachimpulsgeber) eine Codekarte in Verbindung mit einem Kartenleser vorgesehen ist.

7. Zündanlage nach einem der Ansprüche 1 bis 5, dadurch gekennzeichnet, daß als Betätigungsschalter ein programmierbares Codeschloß vorgesehen ist.

8. Zündanlage nach einem der Ansprüche 1 bis 5, dadurch gekennzeichnet, daß als Betätigungsschalter ein Näherungsinitiator, insbesondere ein Daumen-oder Fingerprint vorgesehen ist.

9. Zündanlage nach einem der Ansprüche 1 bis 5, dadurch gekennzeichnet, daß als Betätigungsschalter ein Spezialschlüssel und -schloß mit mehreren Impulsstellen vorgesehen ist.

10. Zündanlage nach einem der Ansprüche 1 bis 5, dadurch gekennzeichnet, daß als Betätigungsschalter eine aus Sender und Empfänger bestehende Funksteuerung vorgesehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2041599 (FAWCETT)<br>* Seite 1, Zeilen 72 - 93; Figuren 2-5 *<br>* Seite 1, Zeile 130 - Seite 2, Zeile 123 *<br>* Seite 4, Zeilen 14 - 16 * | 1, 6, 7, 10 | B60R25/04 |
| Y | | 8, 9 | |
| Y | US-A-4553511 (HAYAKAWA)<br>* Spalte 11, Zeilen 4 - 18 *<br>--- | 8 | |
| Y | EP-A-191934 (NEIMAN)<br>* Seite 5, Zeile 18 - Seite 7, Zeile 2; Figuren *<br>--- | 9 | |
| X | US-A-3803551 (JORDAN)<br>* Zusammenfassung; Figuren 1, 4 *<br>* Spalte 5, Zeilen 23 - 59 * | 1, 6 | |
| Y | | 2 | |
| Y | GB-A-2136620 (BALLANTINE)<br>* Seite 1, Zeile 5 - Seite 2, Zeile 16; Figuren 1, 2 *<br>* Seite 3, Zeilen 25 - 26; Anspruch 9 *<br>--- | 2 | RECHERCHIERTE SACHGEBIETE (Int. Cl.5) |
| X | FR-A-2403914 (LICENCIA PATENT-VERWALTUNGS G.M.B.H.)<br>* Seite 1, Zeile 11 - Seite 2, Zeile 36; Figur 2 * | 1, 6 | B60R |
| A | * Seite 2, Zeile 37 - Seite 3, Zeile 4 * | 3 | |

Der vorliegende Recherchenbericht wurde für alle Patentansprüche erstellt

| Recherchenort | Abschlußdatum der Recherche | Prüfer |
|---|---|---|
| DEN HAAG | 11 APRIL 1990 | DUBOIS B.F.J. |

**KATEGORIE DER GENANNTEN DOKUMENTE**

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes
 Dokument